# EUROPEAN PATENT SPECIFICATION

(11) **EP 1 758 694 B1**
(45) Date of publication and mention of the grant of the patent: **10.08.2011**
(21) Application number: 05752331.8
(22) Date of filing: 22.06.2005
(51) Int. Cl.: B21D 19/02, B21D 19/04, B21D 19/06, B23K 11/00, B23K 13/02, B21D 5/08

(54) **IMPROVEMENTS IN WELDING HOLLOW FLANGE MEMBERS**
VERBESSERUNGEN BEIM SCHWEISSEN HOHLER FLANSCHGLIEDER
AMELIORATIONS APPORTEES AU SOUDAGE D'ELEMENTS DE BRIDE CREUSE

(30) Priority: 23.06.2004 AU 2004903388
(43) Date of publication of application: 07.03.2007
(73) Proprietor: Smorgon Steel Litesteel Products Pty Ltd, Port Melbourne, VIC 3207 (AU)
(72) Inventor: BARTLETT, Ross John, Greenbank, Queensland 4124 (AU); NOLLER, Alexander, Springwood, QLD 4127 (AU); YOKOYAMA, Keiji, Chiba T 273-0047 (JP)
(74) Representative: Köhler, Walter
(86) International application number: PCT/AU2005/000897
(87) International publication number: WO 2006/000018

(56) References cited:
- WO-A-2004/113637
- FR-A1- 2 290 985
- US-A- 3 391 267
- US-A- 3 391 267
- US-A- 5 163 225
- US-A- 5 403 986
- US-A1- 2003 057 255

## Description

This invention is concerned with the manufacture of cold formed hollow flange members by an improved welding process.

The invention is concerned particularly although not exclusively with the manufacture of cold formed, dual welded, hollow flange structural members. The present application relates to a process of and an apparatus for in-line ERW welding of hollow flange steel members in a cold forming line according to the preamble of claims 1 and 8 (see, for example, US 5 163 225).

### BACKGROUND OF THE INVENTION

Although there are many configurations of structural beams illustrated in an extensive array of prior art disclosures, the majority of these beams have been designed with a specific end use in mind. A number of these prior art disclosures have however sought to provide a general purpose structural beam which could compete with the more common general purpose structural beams such as timber including laminated timber beams and hot rolled I-beams, H-beams and hot rolled channels.

Examples of specific purpose structural beams are shown in United States Patents 5,012,626, 3,362,056 and 6,415,577 which describe composite beams having a corrugated web and planar or rectangular section hollow flanges. Australian Patent 716272 describes a truss incorporating hollow flange chords.

Of more recent years, cold formed purlins of C-, Z- and J-shaped cross-section have found favour in relatively low load bearing situations as a replacement for hot rolled sections as generally they have a superior section capacity per unit mass. Such cold formed purlins do have significant limitations in moment capacity as the length of the beam increases due to a number of differing buckling modes of failure. British Patents 2 093 886 and 2 102 465 illustrate respectively cold formed J- and I- or H-sections while International Publication 96/23939 describes a C-section member.

In an endeavour to improve on the section efficiency of cold formed purlin-like sections, it was proposed to employ hollow-flange members to increase the flange section without a consequent or at least significant penalty in beam mass per unit length.

Examples of hollow flanged bearings are shown in United States Patent 3,342,007, Russian Inventor's Certificate 827723 and United States Patent 3,698,224, all of which described hollow flanged beams of triangular cross-section with "open" flanges i.e., they were not formed.with continuous weld seams to optimize the torsional strength of the flange elements.

United States Patents 5,163,225 and 5,373,679 to the present assignee as successor in title thereto, described for the first time cold formed hollow flange beams produced by a dual welding process to produce "closed" flanges of a circular cross-sectional shape where the free edges of the flanges were welded along the edges of the central web member. The generally circular flanges could then be shaped after welding to produce hollow flanges with a variety of cross-sectional shapes such as rectangular, hexagonal, triangular, or the like. Hollow flanged beams having triangular cross-section flanges were known in the marketplace as "Dogbone" (Registered Trade Mark) beams.

Although generally satisfactory for its intended purpose, the dual welding process adopted for the manufacture of "Dogbone" beams suffered a number of shortcomings, in particular weld stability and a limitation in the range of flange cross-sectional sizes due to excessive tooling costs. In one embodiment stress failures in the weld were caused by excessive working of the hardened weld zone in the shaping section of the mill.

As used herein the expression "ERW" refers to electrical resistance or induction welding using either contacts or induction coils/impeders to create a current in the member and other forms of electrical resistance welding.

Accordingly, it is an aim of the present invention to overcome or alleviate at least some of the shortcomings of the prior art "Dogbone" dual welding process and to provide a welding process suitable for the production of hollow flanged cold formed steel members.

### SUMMARY OF THE INVENTION

According to one aspect of the invention there is provided a process of in-line ERW welding of hollow flange steel members in a cold forming mill according to claim 1.

According to the present invention, said free edge is aligned with said weld axis by one or more seam rolls each having a circumferential shoulder providing an abutment for said free edge.

Said free edge of said metal strip is, according to the present invention, urged into abutment with said circumferential shoulder by a contoured guide roll.

Suitably, said metal strip is supported centrally by opposed cylindrical roll surfaces adjacent said weld region as said free edge is urged into abutment with said circumferential shoulder

The seam rolls may be adjustably mounted to guide said free edge toward said closure region at a predetermined angle relative to said strip surface.

Preferably, said free edge of said metal strip is guided through said predetermined trajectory by a contoured squeeze roll extending over said contoured surface of said metal strip between spaced substantially parallel contact faces of said contoured squeeze roll.

Weld energy may be imparted to said free edge and said predetermined weld region by an induction coil coupled to a source of electric current, said coil extending substantially around said metal strip in a plane substantially perpendicular to a longitudinal axis thereof:

If required, an elongate rod-like induction impeder supported at one end may extend within a hollow interior cavity of said contoured surface to a region adjacent a said closure region where said free edge is fused to said surface of said metal strip.

According to another aspect of the invention there is provided an apparatus for in-line ERW welding of hollow flange steel members in a cold forming mill according to claim 8.

Suitably, said electrical current is induced in said free edge and said weld region by electrical contactors slidably engaging said metal strip adjacent said free edge and said weld region.

Preferably, said electrical current is induced in said free edge and said weld region by an induction coil transversely surrounding said metal strip in a plane perpendicular to a direction of travel of said metal strip therethrough.

Preferably, at least one of said pair of squeeze rolls is angularly adjustable in a plane perpendicular to a direction of travel of said metal strip therebetween.

At least one of said pair of squeeze rolls may be adjustable relative to the other of said pair in a direction perpendicular to a rotational axis of said at least one of said pair of squeeze rolls.

Suitably, said weld box includes web support rolls rotatable about parallel respective axes perpendicular to a direction of travel of a metal strip member therebetween.

If required, a web support roll may have a contoured outer edge to function as one of said pair of squeeze rolls.

The apparatus may include more than one seam roll stand.

According to the present invention, at least one of said seam roll stands includes a seam roll having a circumferential shoulder thereon, said circumferential shoulder, in use, providing an abutment for said free edge of said metal strip.

According to the present invention, a contoured guide roll is provided, in use, to urge said free edge of said metal strip into abutment with said circumferential shoulder.

If required, a rod-shaped impeder supported at one end thereof, upstream of said one or more seam roll stands, extends into a hollow interior of a contoured edge region of said metal strip.

### BRIEF DESCRIPTION OF THE DRAWINGS

In order that the invention may be more fully understood and put into practical effect, reference will now be made to preferred embodiments illustrated in the accompanying drawings in which:-
FIG. 1 shows schematically a cold roll forming mill for hollow flange members;
FIG. 2 shows schematically a prior art dual weld process;
FIG. 3 shows schematically a prior art squeeze roll region in a weld box of a cold roll forming mill;
FIG. 4 shows schematically an enlarged part cross-sectional view of the weld box roll configuration of FIG. 3;
FIG. 5 shows a side elevational view of portion of a cold forming mill incorporating forming roll, seam roll and weld box stands;
FIG. 6 shows portion of a forming flower pattern of a hollow flange beam from the latter stages of forming to just prior to entry into the weld box;
FIGS. 7a and 7b show schematically from rear and front views, the configuration of the seam guide roll stand;
FIG. 8 shows schematically the configuration of the weld box stand;
FIG. 9 shows schematically the configuration of the rolls in the weld box stand of FIG. 8;
FIG.10 shows schematically a phantom perspective view of the rolls in the weld box stand of FIG. 8;
FIG. 11 shows schematically the configuration and relationship of an inductor coil and impeders;
FIG. 12 shows schematically a cross-sectional view of the inductor coil/impeder assembly of FIG. 12, in use, with a hollow flange section therein; and
FIGS. 13-16 show cross-sections of hollow flange members made pursuant to the method and apparatus according to the invention.

Through the drawings, where appropriate, like reference numerals are employed for like features for the sake of clarity.

### DETAILED DESCRIPTION OF THE DRAWINGS

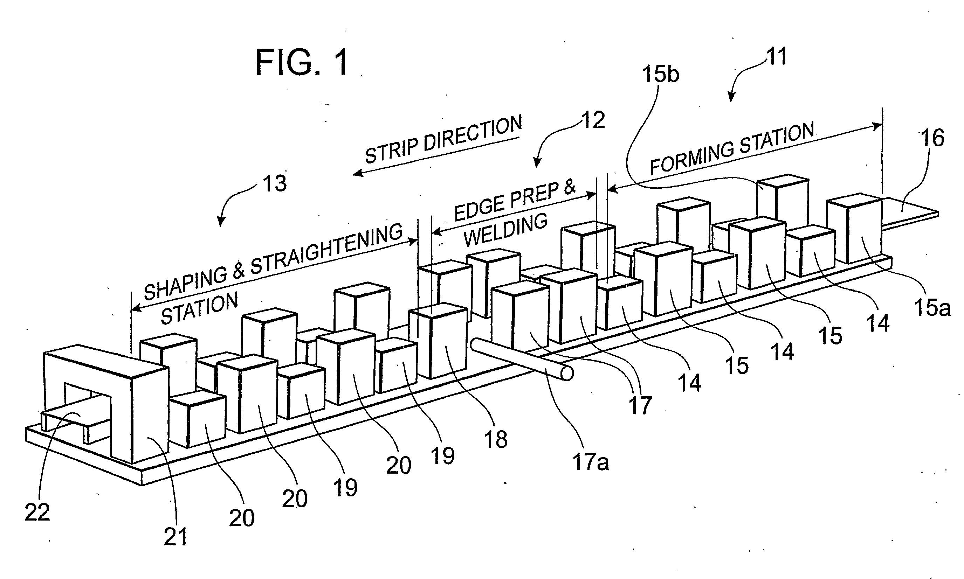

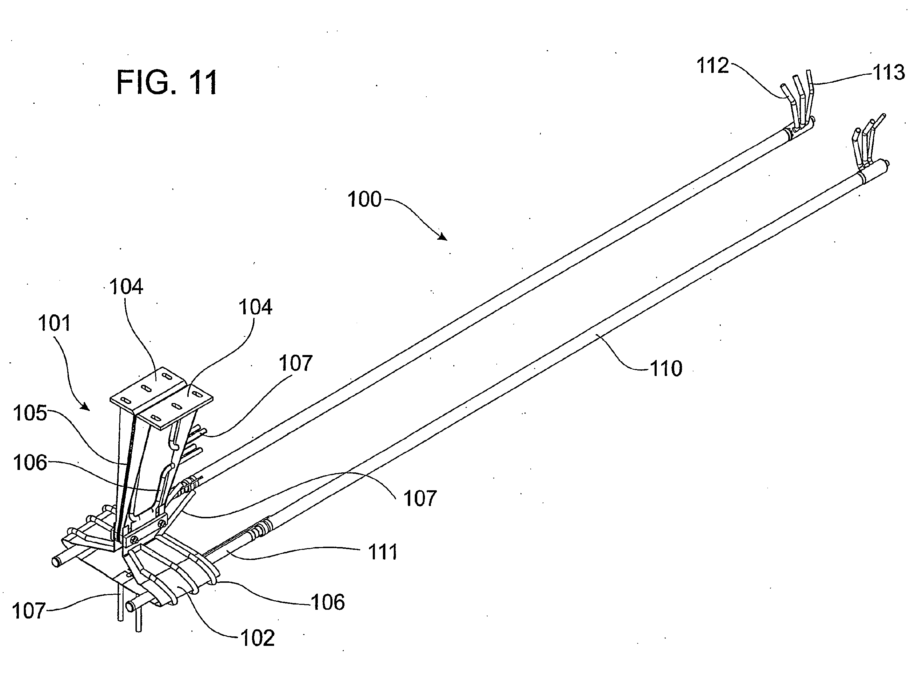

FIG. 1 shows schematically a typical general configuration of a roll forming mill which may be employed in the manufacture of hollow flange members as exemplified in FIGS. 11 to 14. Simplistically, the mill comprises a forming station 11, a welding station 12, and a shaping station 13.

Forming station 11 comprises alternative drive stands 14 and forming roll stands 15. Drive stands 14 are coupled to a conventional mill drive train (not shown) but instead of employing contoured forming rolls to assist in the shaping process, plain cylindrical rolls are employed to grip steel strip 16 in a central region corresponding to the web portion of the resultant beam. The forming roll stands 15 are formed as separate pairs 15a,15b each equipped with a set of contoured rollers adapted to form a hollow flange portion on opposite sides of the strip of metal 16 as it passes through the forming station. As the forming roll stands 15a,15b do not require coupling to a drive train as in conventional cold roll forming mills, forming roll stands are readily able to be adjusted transversely of the longitudinal axis of the mill to accommodate hollow flange beams of varying width.

When formed to a desired cross-sectional configuration, the edge formed strip 16 enters the welding station 12 wherein the free edges of edge formed portions are guided into contact with the web at a predetermined angle of approach in the presence of an ERW welding apparatus. To assist in location of the fee edges relative to a desired weld region on the strip surface, the formed strip is directed through seam guide roll stands 17 into the region of the ERW apparatus shown schematically at 17a. After the strip edges and the weld seam line region on the face of the strip are heated to fusion temperature, the strip passes through a weld box stand 18 to urge the heated portions together to fuse closed flanges. The welded hollow flange section then proceeds through a succession of drive roll stands 19 and shaping roll stands 20 to form the desired cross-sectional shape of the member and finally through a conventional turk's head roll stand 21 for final straightening and thence to issue as a dual welded hollow flange beam 22. The ERW welder imparts a current into the free edges of the strip and respective adjacent regions of the web due to a proximity effect between a free edge and the nearest portion of the web. Because the thermal energy in the web portion is able to dissipate bi-directionally compared with a free edge of the flange, additional energy is required to induce sufficient heat into the web region to enable fusion with the free edge.

Hitherto it was found that by using conventional roll forming techniques and an ERW process employing the quantity of energy required to heat the inner strip portion to fusion temperature is such as to cause the free edge to become molten and to flow as molten globules away from the edge. As a result of this strip edge loss, the cross-sectional area of the flange was reduced significantly and control of the strip edge into the weld point became more difficult.

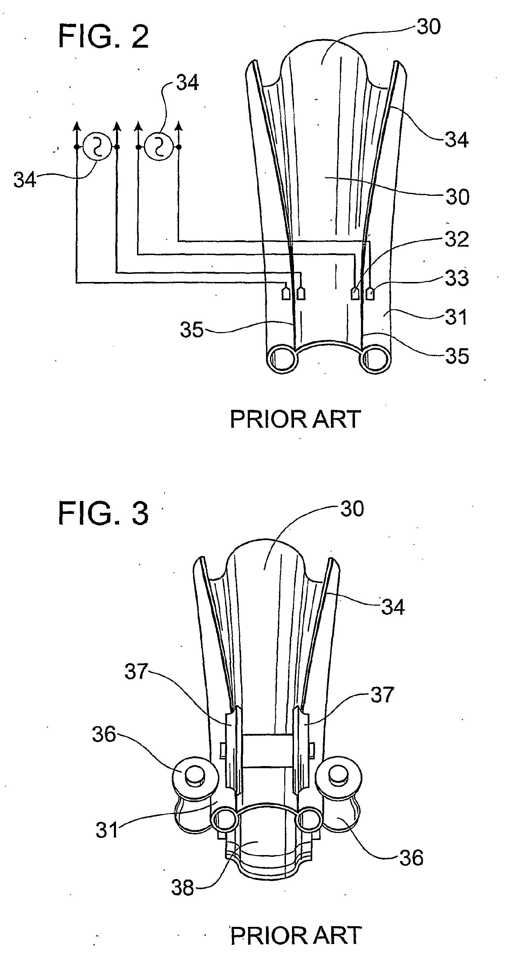

FIG. 2 shows schematically a prior art technique for high frequency ERW welding.

In FIG. 2, the web 30 was formed in an arcuate cross-sectional shape in an endeavour to minimize the extent to which the hollow flanges 31 had to be formed to bring the free edges into contact with the edge of the web 30. Pairs of contactors 32,33 coupled to respective sources 34 of high frequency alternating current electricity were located adjacent the free edge 34 of each flange 31 and adjacent the edge of the web at which a weld seam was to be formed. As can be seen, the free edge 34 of each hollow flange 31 approached the weld seam line 35 at an angle thereto, both in a vertical plane and a horizontal plane.

FIG. 3 illustrates a typical prior art weld box roll configuration wherein side rolls 36 urge the shaped flanges 31 inwardly in a horizontal direction while contoured squeeze rolls 37, co-operating with lower support roll 38 urge the heated free edges of the flanges into contact with a heated region at the edge of web 30 to effect fusion therebetween.

The combined forces applied to the free edges of the flanges by the side rolls 36 and squeeze rolls 37 is effectively to roll the entire flange section whilst effectively reducing its diameter.

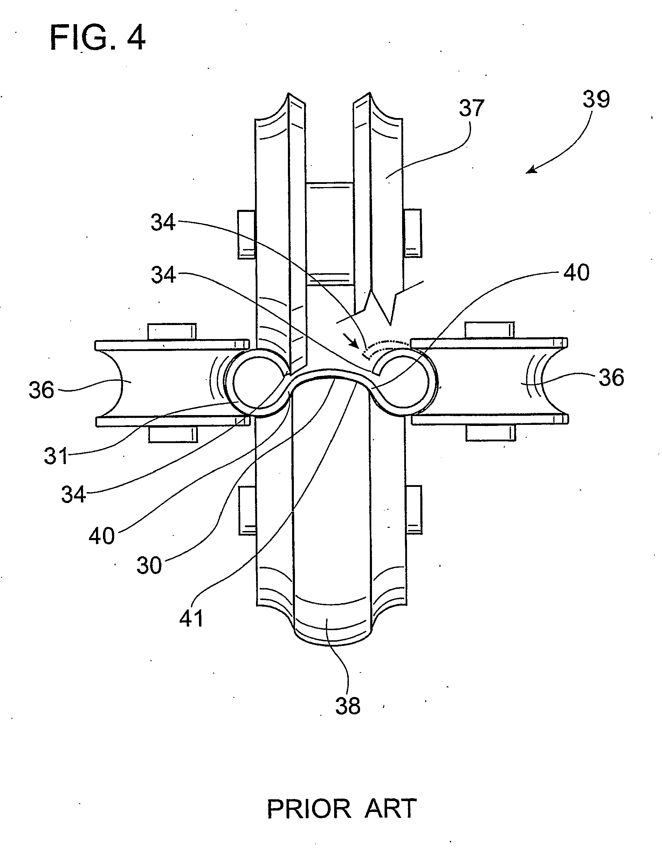

FIG. 4 is an enlarged cross-sectional view through the weld box roll assembly shown in FIG. 3. Prior to entry into the weld box roll assembly shown generally at 39, the free edges 34 of flanges 31 are spaced above an ultimate weld seam locations 40 on metal strip 30 as shown in the cutaway region in a somewhat exaggerated manner in phantom. As the roll formed section proceeds through the weld box roll assembly 39, the free edges 34 of the hollow flanges 31 are urged downwardly and outwardly by the combined pressures of the co-operating rolls 36,37,38 whereby the free edges 34 "sweep" across the surface of web 30 until they contact the surface thereof at respective weld seam positions 40.

During the "sweeping" motion of the free edges 34, the heat "shadow", induced in the web by the proximity of the free edges 34 was caused to move outwardly from a position 41, represented by the shortest distance between the free edge 34 and the upper surface of the web, towards the weld seam position 40 at which fusion occurred. Because of the inability to focus the heat induced by the proximity effect in the ultimate weld seam site, a substantial amount of heat energy was dissipated in the web and the adjacent regions of hollow flanges.

In order to overcome energy dissipation, the electrical energy input was increased to compensate for heat energy losses however this tended to overheat the free edge of the web to the extent that molten metal was lost from the free edge of the flange by melting. Moreover, the requirement to overheat the flange edges to induce sufficient heat into the web edge to obtain adequate weld integrity was exacerbated by edge buckling which resulted in loss of weld stability.

It has now been discovered that the aforementioned difficulties can be overcome by aligning the free edge of the flange with the intended weld line as it is heated and then urging the free edge of the strip into contact with the heated web region along a straight pathway in a direction corresponding to a desired angle of incidence between the web portion and the region of flange edge in the vicinity of the weld seam. By guiding the free edge of the flange edge along this predetermined trajectory, the "sweeping" effect caused by the rotation of the flange in the squeeze rolls of the weld box avoided the problem of inducing heat into an unnecessarily wide path extending away from the desired weld seam line as the free edge was brought into alignment with the desired weld seam line.

The far greater control of the high frequency electrical resistance or induction welding process has led to improved production efficiencies and significantly improved manufacturing tolerances on the dual welded hollow flange members made in accordance with the process and apparatus according to the invention.

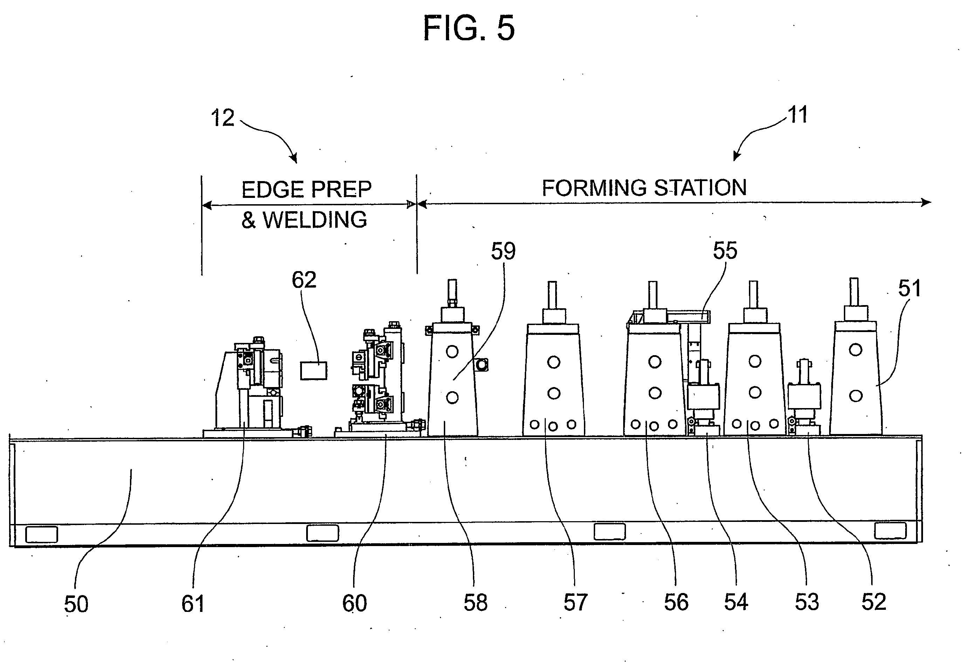

FIG. 5 shows a side elevational view of portion of a cold roll forming mill incorporating portion of the forming station 11 and the edge preparation and welding station 12 of FIG. 1.

In FIG. 5, a mill bed 50 supports a driven forming roll 51, an idler stand 52, an undriven edge forming stand 53, a further idler stand 54, an impeder bracket 55, an undriven edge forming stand 56, a further undriven edge forming stand 57, a driven forming roll stand 58 with side rolls 59, a six roll seam guide roll stand 60 and a four roll weld box stand 61. Located between stands 60 and 61 is a work coil 62.

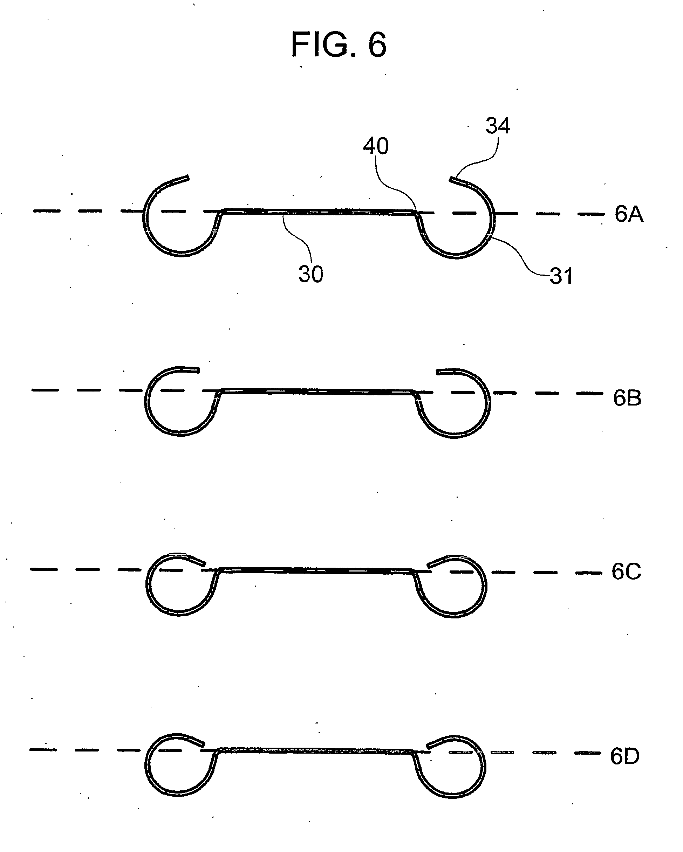

FIG. 6 is illustrative of a flower pattern for a hollow flange member produced in the mill portion shown in FIG. 5.

Section 6A is illustrative of the shape emerging from roll stand 53, section 6B is illustrative of the shape emerging from roll stand 58, section 6C is illustrative of the shape emerging from seam guide roll stand 60 and section 6C is illustrative of the shape of the roll formed section prior to entry into weld box stand 61. As can be seen the trajectory of the free edge 34 of hollow flange 31 follows a path of least distance between edge 34 and the edge 40 of web 30 and as the section approaches the seam guide roll stand 60, the cross-sectional shape of the hollow flange as shown at 6C has adopted a somewhat ovoid shape. It also will be seen that the position of the flange edge 34 has been fixedly located relative to the edge 40 of web 30 in the region of the induction coil 62.

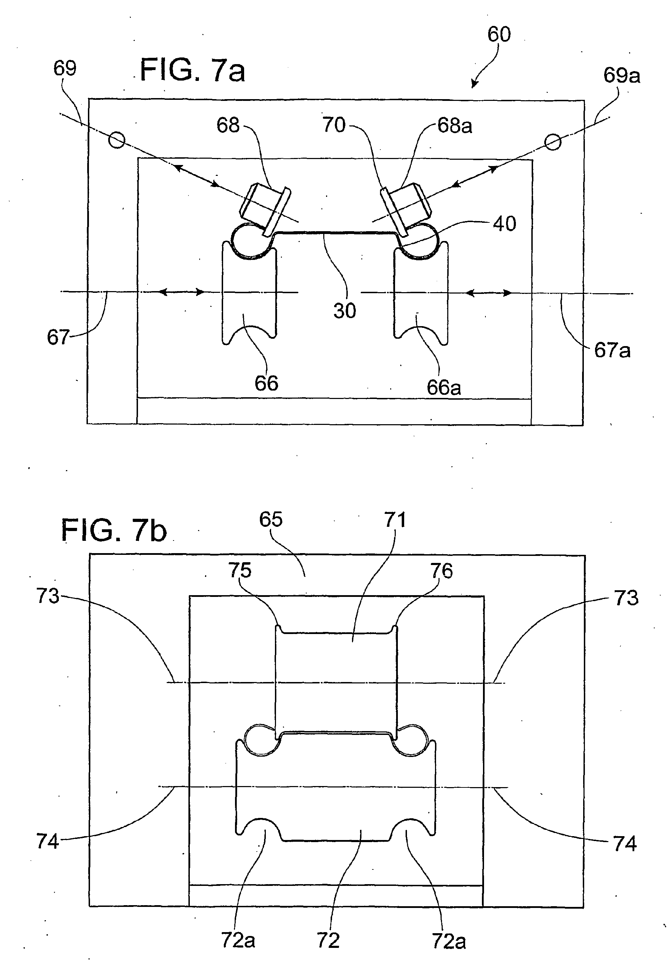

FIG. 7 shows schematically the configuration of the seam guide roll stand 60 of FIG. 5 in which FIG. 7a is a downstream elevational view and FIG. 7b is an upstream elevational view.

FIG. 7a shows schematically a downstream elevational view of the seam roll stand 60 in FIG. 5. Roll stand 60 comprises a support frame 65, on the downstream face of which are mounted a pair of independently mounted, contoured support rolls 66,66a each journalled for rotation about aligned rotational axes 67,67a and seam guide rolls 68,68a rotatably journalled on respective inclined axes 69,69a. Seam guide rolls 68,68a serve to guide the free edges 34a,34b of hollow flanges 31,31 a into longitudinal alignment with a desired weld seam line as the cold formed section approaches the squeeze rolls of the weld box 61.

Located about the inner edges of seam guide rolls 68,68a are peripheral beaded edges 70 which serve as an abutment against which the free edges 34 of the hollow flanges may be urged to align those flange edges with the edges 40 of web 30.

Both seam guide rolls 68,68a and support rolls 66,66a are axially adjustable to accommodate hollow flange members of differing sizes. Similarly, seam guide rolls 68,68a are pivotally mounted on support frame 65.

FIG. 7b is an upstream view of the seam guide roll support stand 60.

Located within the arched frame 65 are a cylindrical seam guide roll 71 and a cylindrical support roll 72, each rotatably journalled about respective rotational axes 73,74. Support roll 72 includes contoured end regions 72a to accommodate portion of the hollow flanges 31 while beaded ends 75,76 of seam guide roll locate over the inner edges 40 of web 30 with the free edges 34 of hollow flanges 31 abutting against the planar ends of roll 71. Web 30 is firmly clamped between the cylindrical portions of rolls 71 and 72 to prevent buckling thereof, particularly adjacent edges 40.

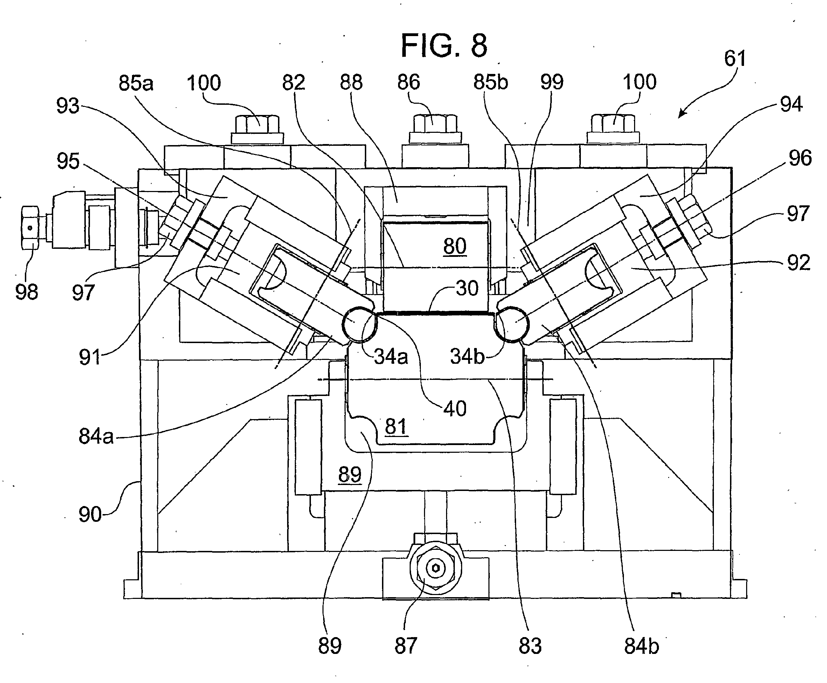

FIG. 8 shows the configuration of the four roll weld box 61 in FIG. 5.

Weld box 61 comprises a cylindrical,top roll 80 and a cylindrical lower roll 81 with contoured edges 81 a, each of rolls 80,81 being rotatably journalled about respective rotational axes 82,83. Contoured squeeze rolls 84a,84b rotatable about respective inclined axes 85a,85b are adapted to urge the heated free edges 34a,34b of hollow flanges 31 into respective heated weld seam line regions along the opposed boundaries 40 of web 30 to effect fusion therebetween to create a continuous weld seam. It will be noted that the cavities defined between squeeze rolls 84a,84b and respective contoured edges 81 a of cylindrical support roll 81 are ovoid in shape similar to the cross-sectional shape of the hollow flanges 31 represented by section 6D of FIG. 6.

The free edges 34a,34b are urged toward respective weld lines in a linear fashion perpendicular to the respective rotational axes 85a,85b of squeeze rolls 84a,84b without a transverse "sweeping" action thereby maintaining stable induction "shadows" or pathways on or at the desired position of the weld seams between respective free edges 34a,34b and the opposed boundaries 40 of web 30.

Cylindrical rollers 80,81 are adjustably mounted for movement in an upright plane by adjustment screws 86,87 respectively, the screws 86,87 being coupled to roll carriages 88,89 respectively, slidably mounted in support frame 90.

Squeeze rolls 84a,84b are slidably mounted in respective carriages 91,92 of squeeze roll support frames 93,94 respectively for slidable adjustment along respective sliding axes 95,96 by means of adjustment screws 97. Squeeze roll support frames 93,94 are, in turn, adjustably mounted for transverse movement by a screw 98 coupling mountings for support frames 93,94 by a threaded shaft 99 and for upright movement by screws 100. Preferably, roll support frames are pivotally mounted on frame 90 for pivotal movement about respective axes parallel to the direction of movement of a hollow flanged member moving through weld box stand 61.

The adjustable roll mounting enables a wide range of hollow flange members of varying dimensions and cross-sectional configurations to be welded in the weld box with extremely precise control over the trajectory through which the free edges of the hollow flanges travel towards a precisely located weld seam line adjacent or at the edges of the member web.

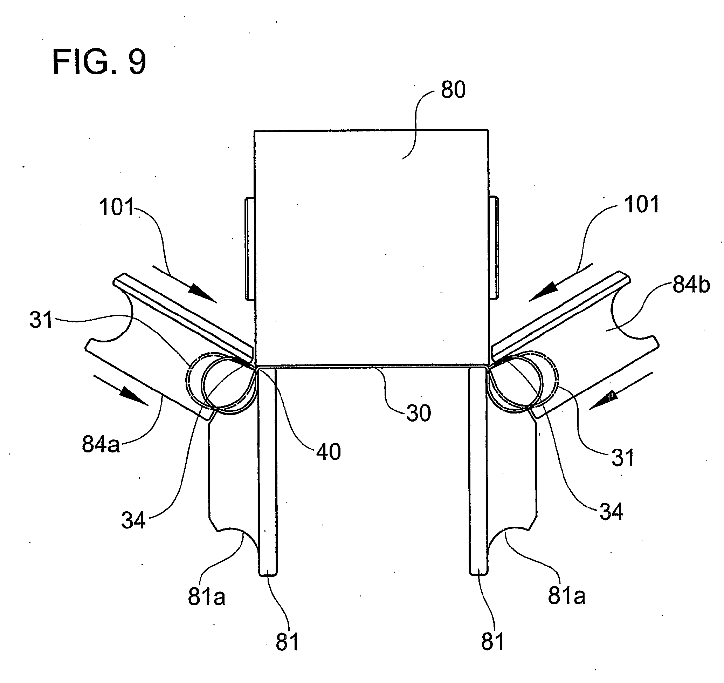

FIG. 9 shows schematically the configuration of the rolls in weld box 61 of FIG. 8 to more clearly illustrate the guidance of the free edges of the hollow flanges into the weld seams along the edges of the web.

In the drawing a somewhat exaggerated position of the formed hollow flanges 31 and their respective free edges 34 is shown in phantom. As the formed section approaches the roll combination, hollow flanges 31 are urged inwardly towards the contoured ends 81 a of separate rollers 81 which correspond to the movement of rollers 84a,84b along respective sliding axes 95,96 as shown in FIG. 8.

Importantly, it can be seen that about half of the outer portion of the hollow flanges which terminate in the free edges 34 is urged in the direction shown by arrows 101 whereby the almost flat region of the flange adjacent the free edge 34 and a corresponding portion of the opposite side of the flange are driven together as a unitary portion towards roll 81 whereby deformation of the remaining portion of the flange adjacent the edge 40 of the web 30 is accommodated in the contoured edges 81a of rolls 81. Equally, it will be seen that the free edge 34 of the web 31 travels in a straight line trajectory to the edge 40 of web 30 where the weld seam is formed.

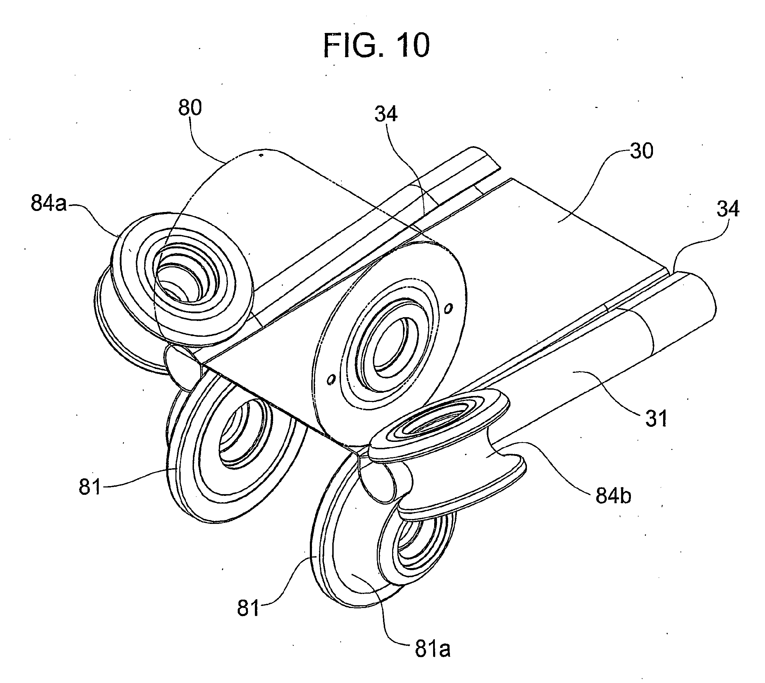

FIG. 10 shows schematically in phantom an enlarged perspective view of the relationship of the squeeze rolls 84a,84b to upper and lower support rolls 80,81 as the free edges 34 of flanges 31 are guided into fusion with the boundaries 40 of web 30. In the embodiment shown, lower support roll 81 is illustrated as separately journalled roll elements, each with a contoured outer edge 81a.

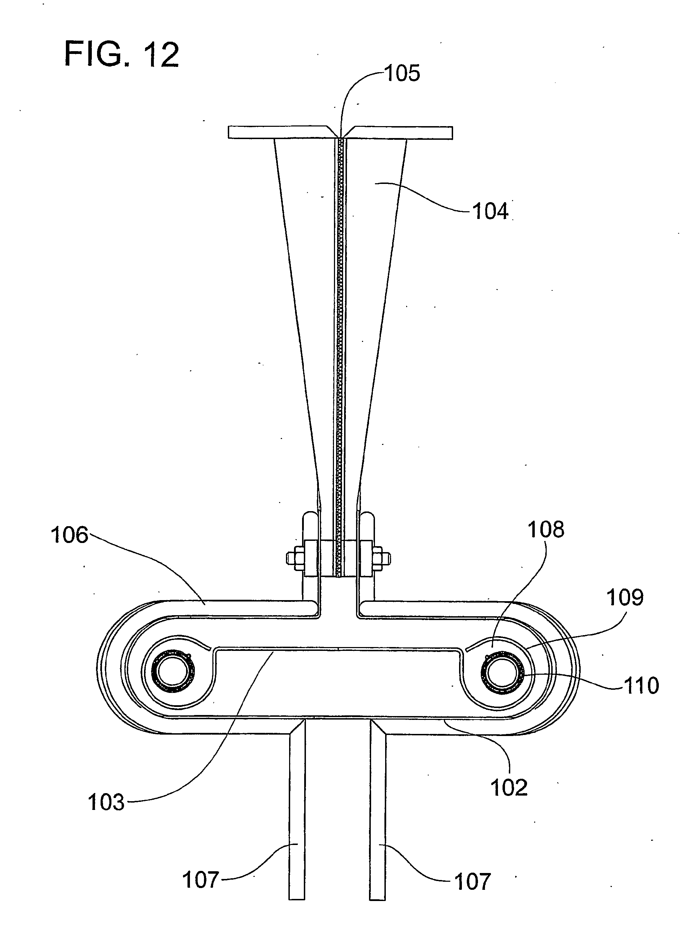

FIGS. 11 and 12 show schematically the high frequency electrical energy induction apparatus 100 employed with the apparatus according to the invention.

Apparatus 100 comprises an inductor coil assembly 101 having a shaped sheet copper coil 102 which substantially surrounds a hollow flange beam 103 as it travels between the seam guide roll station and the weld box. Coil assembly 101 is supported at opposite ends by copper mounting brackets 104 with a layer of insulating material 105 therebetween.

Formed over the surface of coil 102 and brackets 104 are copper tubes 106 with inlet and outlet ports 107 for circulation of cooling water therein. Coil 102 is coupled to an oscillator (not shown) having a capacity of 400-800 Kw AC output at 400 KHz.

Located within the hollow cavities of hollow flanges 109 of beam 103 are elongate impeder support rods 110 having cylindrical impeders 111 attached thereto. As shown in FIG. 5, impeder support rods 110 are supported on a bracket 55 upstream of the welding station 12 by members (not shown) extending into the flange cavities 108 via the gap between the free edge of the hollow flange 109 and the adjacent side of the web. Coolant circulation tubes 112 and an air tube 113 extend through the gap between the free edge of the flange 109 and the adjacent side of the web to supply a recirculating liquid coolant and a stream of cool air to impeders 111 containing ferrite rods (not shown).

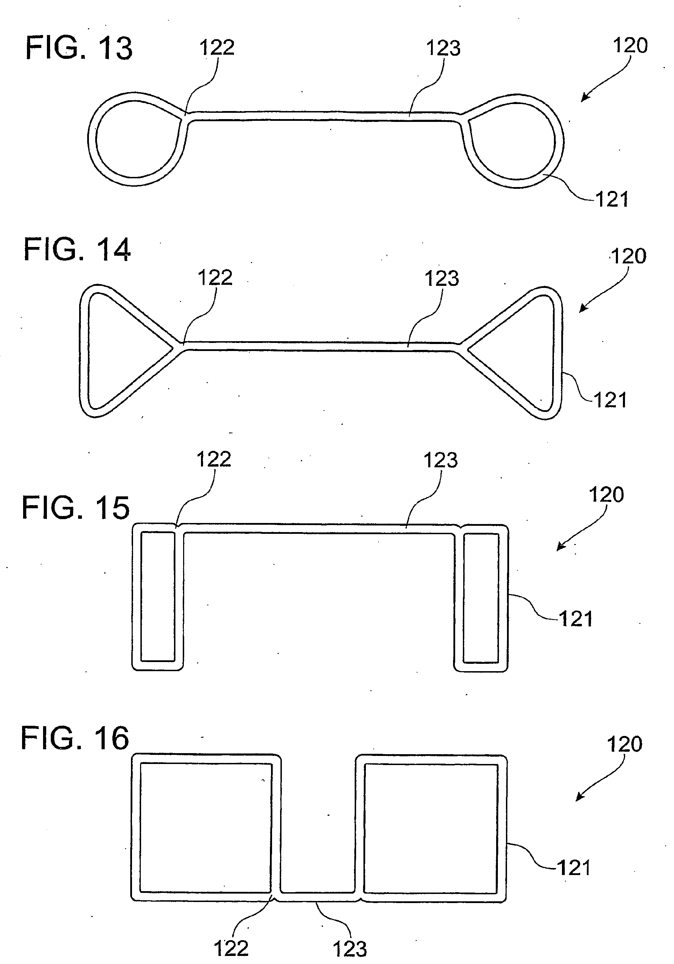

FIGS. 13 to 16 show a non-limiting range of examples of hollow flange members able to be manufactured in accordance with the process and the apparatus of the invention.

FIG. 13 shows a hollow flange member 120 having a pair of circular cross-section hollow flanges 121 located along the edges 122 of web 123. Member 120 may be employed as a structural member as it is or it may be used as a precursor to hollow flange beams having flanges of non-circular cross-sections.

FIG. 14 shows a hollow flange beam of the "Dogbone" (Registered Trade Mark) configuration as described generally in United States Patent 5,163,225.

FIG. 15 shows a hollow flange beam with rectangular flanges according to co-pending Australian Patent Application 2003903142.

FIG. 16 shows a hollow flange beam with rectangular flanges for use as chords in a composite truss beam structure. The welding process and apparatus according to the invention is particularly advantageous for deep or narrow channel sections such as that illustrated. While it might otherwise be difficult to weld the free edge of a hollow flange to the surface of a web intermediate its side edges when formed inwardly of the web because of an inability to control the free edges deep in the channel with seam guide rolls, forming the hollow flanges outwardly of the web greatly simplifies the welding process due to precise flange edge control.

It readily will be apparent to a person skilled in the art that many modifications and variations may be made to the various aspects of the present invention without departing from the scope thereof as defined in the appended claims.

For example, the configuration of the forming rolls, the seam guide rolls and the squeeze roll combination may be adapted to permit differing angles of approach of a free edge of a hollow flange to a weld seam to ensure that, as far as possible, in the subsequent shaping of the hollow flange to a desired cross-section, little or no stress is imposed on the weld seam which could lead to stress failure.

## Claims

1. A process of in-line electric resistance or induction welding (ERW) of hollow flange steel members in a cold forming mill, said process comprising the steps of:-
forming from a metal strip (16) a contoured surface having a free edge (34); and
welding, by an electric resistance or induction welding (ERW) process, said free edge (34) to a surface of said metal strip (16) to form a hollow flange (31), said process **characterized by** aligning said free edge (34) linearly with a predetermined weld axis on said surface of said strip by one or more seam guide rolls (68,68a), each of which has a circumferential shoulder (70), urging said free edge (34) into abutment with said shoulder (70) by a countoured guide roll (66, 66a), and guiding said free edge (34) through a predetermined linear trajectory along an incidence axis of a subsequent weld junction between said free edge and said surface whereby weld energy is focussed by a proximity effect along said predetermined weld axis on said surface prior to fusing said free edge (34) to said surface.

2. A process as claimed in claim 1 wherein said metal strip (16) is supported centrally by opposed cylindrical roll surfaces adjacent said weld axis as said free edge (34) is urged into abutment with said circumferential shoulder (70).

3. A process as claimed in claim 1 wherein said seam guide rolls (68, 68a) are adjustably mounted to guide said free edge (34) toward said weld axis at a predetermined angle relative to said strip surface.

4. A process as claimed in claim 1 wherein said free edge (34) of said metal strip (16) is guided through said predetermined trajectory by a contoured squeeze roll (84a, 84b) extending over said contoured surface of said metal strip (16) between spaced substantially parallel contact faces of said contoured squeeze roll (84a, 84b).

5. A process as claimed in claim 1 wherein weld energy is imparted to said free edge (34) and said predetermined weld axis by an induction coil (102) coupled to a source of electric current, said coil (102) extending substantially around said metal strip (16) in a plane substantially perpendicular to a longitudinal axis thereof.

6. A process as claimed in claim 1 wherein weld energy is imparted to said free edge (34) and said predetermined weld axis by one or more contactors coupled to a source of electric current.

7. A process as claimed in claim 5 wherein an elongate rod-like induction impeder supported at one end extends within a hollow interior cavity of said contoured surface to a region adjacent said weld axis where said free edge (34) is fused to said surface of said metal strip (16).

8. An apparatus for in-line electric resistance or induction welding (ERW) of hollow flange steel members in a cold forming mill, said apparatus comprising:-
a seam roll stand (60) rotatably supporting one or more seam guide rolls for guiding a free edge (34) of a contoured metal strip (16) into linear alignment with a predetermined weld axis spaced from said free edge (34) on a surface of said metal strip (16) **characterised in that** each of said guide rolls (68, 68a) having a circumferential shoulder (70) thereon for providing, in use, an abutment for said free edge (34);
a contoured guide roll (66, 66a) adapted, in use, to urge said free edge (34) of said metal strip (16) into abutment with said circumferential shoulder (70); and,
a weld box stand (61) rotatably supporting at least one pair of squeeze rolls (84a, 84b), in use, to urge said free edge (34) when heated to a predetermined temperature into fused engagement with said weld axis on said surface, said pair of squeeze rolls (84a, 84b) co-operating, in use, to guide said free edge (34) through a predetermined linear trajectory substantially along an incidence axis of a subsequent weld junction between said free edge (34) and said surface of said metal strip (16) whereby weld energy is focussed by a proximity effect along said predetermined weld axis on said surface and wherein one or more rolls (68, 68a) serve to guide said free edge (34) into longitudinal alignment with a desired weld seam line.

9. An apparatus as claimed in claim 8 wherein said weld energy is induced in said free edge (34) and said weld axis by electrical contactors slidably engaging said metal strip (16) adjacent said free edge (34) and said weld axis.

10. An apparatus as claimed in claim 8 wherein said weld energy is induced in said free edge and said weld axis by an induction coil transversely surrounding said metal strip in a plane perpendicular to a direction of travel of said metal strip therethrough.

11. An apparatus as claimed in claim 8 wherein at least one of said pair of squeeze rolls (84a, 84b) is angularly adjustable in a plane perpendicular to a direction of travel of said metal strip (16) therebetween.

12. An apparatus as claimed in claim 8 wherein at least one of said pair of squeeze rolls (84a, 84b) is adjustable relative to the other of said pair in a direction perpendicular to a rotational axis of said at least one pair of squeeze rolls (84a, 84b).

13. An apparatus as claimed in claim 8 wherein said weld box (61) includes web support rolls (72) rotatable about parallel respective axes perpendicular to a direction of travel of a metal strip member therebetween.

14. An apparatus as claimed in claim 13 wherein at least one of said web support rolls (81) has a contoured outer edge to function as one of said pair of squeeze rolls (84a, 84b).

15. An apparatus as claimed in claim 8 including more than one seam roll stand (60).

16. An apparatus as claimed in claim 10 wherein a rod-shaped impeder supported at one end thereof, upstream of said one or more seam roll stands (60), extends into a hollow interior of a contoured edge region of said metal strip (16).

## Patentansprüche

1. Verfahren zum Inline-Widerstands- oder -Induktionsschweißen (ERW) von hohlen Flanschstahlelementen in einem Kaltwalzwerk, wobei das Verfahren die folgenden Schritte umfasst:
Formen einer profilierten Oberfläche mit einer freien Kante (34) aus einem Metallband (16); und
Schweißen durch einen Widerstands- oder Induktionsschweißprozess (ERW-Prozess) der freien Kante (34) an eine Oberfläche des Metallbandes (16), um einen hohlen Flansch (31) zu formen, wobei der Prozess **gekennzeichnet ist durch** geradliniges Ausrichten der freien Kante (34) auf eine vorgegebene Schweißachse auf der Oberfläche des Bandes **durch** eine oder mehrere Nahtführungswalzen (68, 68a), wovon jede eine Umfangsschulter (70) besitzt, Drängen der freien Kante (34) in einen Anschlag an der Schulter (70) **durch** eine profilierte Führungswalze (66, 66a) und Führen der freien Kante (34) **durch** eine vorgegebene geradlinige Bahn längs einer Auftreffachse einer nachfolgenden Übergangszone zwischen der freien Kante und der Oberfläche, wodurch Schweißenergie durch eine Nahwirkung längs der vorgegebenen Schweißachse auf die Oberfläche konzentriert wird, bevor die freie Kante (34) mit der Oberfläche verschmolzen wird.

2. Verfahren nach Anspruch 1, wobei das Metallband (16) mittig durch gegenüberliegende zylindrische Walzoberflächen angrenzend an die Schweißachse unterstützt wird, wenn die freie Kante (34) in einen Anschlag mit der Umfangsschulter (70) gedrängt wird.

3. Verfahren nach Anspruch 1, wobei die Nahtführungswalzen (68, 68a) einstellbar montiert sind, um die freie Kante (34) unter einem vorgegebenen Winkel relativ zu der Bandoberfläche zu der Schweißachse zu führen.

4. Verfahren nach Anspruch 1, wobei die freie Kante (34) des Metallbandes (16) durch die vorgegebene Bahn mittels einer profilierten Quetschwalze (84a, 84b) geführt wird, die sich über die profilierte Oberfläche des Metallbandes (16) zwischen den beabstandeten, im Wesentlichen parallelen Kontaktflächen der profilierten Quetschwalze (84a, 84b) erstreckt.

5. Verfahren nach Anspruch 1, wobei die Schweißenergie in die freie Kante (34) und in die vorgegebene Schweißachse durch eine Induktionsspule (102), die mit einer Quelle für elektrischen Strom gekoppelt ist, eingetragen wird, wobei sich die Spule (102) im Wesentlichen um das Metallband (16) in einer Ebene, die zu einer Längsachse hiervon im Wesentlichen senkrecht ist, erstreckt.

6. Prozess nach Anspruch 1, wobei die Schweißenergie in die freie Kante (34) und in die vorgegebene Schweißachse durch eine oder mehrere Kontakteinrichtungen, die mit einer Quelle für elektrischen Strom gekoppelt sind, eingetragen wird.

7. Verfahren nach Anspruch 5, wobei sich eine lang gestreckte, stabähnliche Induktionsbehinderungseinrichtung, die an einem Ende unterstützt ist, in einem hohlen, inneren Hohlraum der profilierten Oberfläche zu einem Bereich angrenzend an die Schweißachse erstreckt, wo die freie Kante (34) mit der Oberfläche des Metallbandes (16) verschmolzen wird.

8. Vorrichtung zum Inline-Widerstands- oder -Induktionsschweißen (ERW) von hohlen Flanschstahlelementen in einem Kaltwalzwerk, wobei die Vorrichtung umfasst:
ein Nahtwalzgerüst (60), das eine oder mehrere Nahtführungswalzen drehbar unterstützt, um eine freie Kante (34) eines profilierten Metallbandes (16) in eine geradlinige Ausrichtung auf eine vorgegebene Schweißachse, die von der freien Kante (34) auf einer Oberfläche des Metallbandes (16) beabstandet ist, zu führen, **dadurch gekennzeichnet, dass** jede der Führungswalzen (68, 68a) eine daran vorgesehene Umfangsschulter (70) besitzt, um im Gebrauch einen Anschlag für die freie Kante (34) zu schaffen;
eine profilierte Führungswalze (66, 66a), die dazu ausgelegt ist, im Gebrauch die freie Kante (34) des Metallbandes (16) in einen Anschlag mit der Umfangsschulter (70) zu drängen; und
ein Schweißkastengerüst (61), das wenigstens ein Paar Quetschwalzen (84a, 84b) drehbar unterstützt, um im Gebrauch die freie Kante (34), wenn sie auf eine vorgegebene Temperatur erhitzt ist, in einen Schmelzeingriff mit der Schweißachse auf der Oberfläche zu drängen, wobei das Paar Quetschwalzen (84a, 84b) im Gebrauch zusammenwirkt, um die freie Kante (34) durch eine vorgegebene geradlinige Bahn im Wesentlichen längs einer Auftreffachse einer nachfolgenden Übergangszone zwischen der freien Kante (34) und der Oberfläche des Metallbandes (16) zu führen, wodurch Schweißenergie durch eine Nahwirkung längs der vorgegebenen Schweißachse auf der Oberfläche konzentriert wird und wobei eine oder mehrere Walzen (68, 68a) dazu dienen, die freie Kante (34) in eine longitudinale Ausrichtung auf eine gewünschte Schweißnahtlinie zu führen.

9. Vorrichtung nach Anspruch 8, wobei die Schweißenergie in die freie Kante (34) und die Schweißachse durch elektrische Kontakteinrichtungen eingetragen wird, die mit dem Metallband (16) in der Nähe der freien Kante (34) und der Schweißachse gleitend in Eingriff sind.

10. Vorrichtung nach Anspruch 8, wobei die Schweißenergie in die freie Kante und die Schweißachse durch eine Induktionsspule, die das Metallband in einer Ebene senkrecht zu einer Richtung, in der sich das Metallband hindurchbewegt, quer umgibt, induziert wird.

11. Vorrichtung nach Anspruch 8, wobei wenigstens eine der beiden Quetschwalzen (84a, 84b) in Winkelrichtung in einer Ebene senkrecht zu einer Richtung, in der sich das Metallband (16) zwischen ihnen bewegt, einstellbar ist.

12. Vorrichtung nach Anspruch 8, wobei wenigstens eine der beiden Quetschwalzen (84a, 84b) relativ zu der Anderen des Paars in einer Richtung senkrecht zu einer Drehachse des wenigstens einen Paars von Quetschwalzen (84a, 84b) einstellbar ist.

13. Vorrichtung nach Anspruch 8, wobei der Schweißkasten (61) Bahnunterstützungswalzen (72) enthält, die um jeweilige parallele Achsen senkrecht zu einer Richtung, in der sich das Metallbandelement zwischen ihnen bewegt, drehbar sind.

14. Vorrichtung nach Anspruch 13, wobei wenigstens eine der Bahnunterstützungswalzen (81) eine profilierte Außenkante besitzt, um als eine der beiden Quetschwalzen (84a, 84b) zu dienen.

15. Vorrichtung nach Anspruch 8, die mehr als ein Nahtwalzgerüst (60) besitzt.

16. Vorrichtung nach Anspruch 10, wobei sich eine stabförmige Behinderungseinrichtung, die an einem ihrer Enden unterstützt ist, stromaufseitig des einen oder der mehreren Nahtwalzgerüste (60) in einen hohlen Innenraum eines profilierten Kantenbereichs des Metallbandes (16) erstreckt.

## Revendications

1. Procédé de soudage par résistance électrique ou induction (ERW) en ligne d'éléments en acier à bordure creuse dans un laminoir de formage à froid, ledit procédé comprenant les étapes de :
formation, à partir d'une bande métallique (16), d'une surface profilée présentant un bord libre (34) ; et
soudage, par un procédé de soudage par résistance électrique ou induction (ERW), dudit bord libre (34) sur une surface de ladite bande métallique (16) de manière à former une bordure creuse (31), ledit procédé étant **caractérisé par** l'alignement dudit bord libre (34) linéairement avec un axe de soudage prédéterminé sur ladite surface de ladite bande par un ou plusieurs rouleaux de guidage de soudure (68,68a), chacun d'eux présentant un épaulement circonférentiel (70), l'application dudit bord libre (34) en butée sur ledit épaulement (70) par un rouleau de guidage profilé (66, 66a), et le guidage dudit bord libre (34) suivant une trajectoire linéaire prédéterminée le long d'un axe d'incidence d'une jonction soudée ultérieure entre ledit bord libre et ladite surface de telle sorte que l'énergie de soudage est concentrée par un effet de proximité le long dudit axe prédéterminé de soudage sur ladite surface avant la fusion dudit bord libre (34) sur ladite surface.

2. Procédé selon la revendication 1 dans lequel ladite bande métallique (16) est supportée de manière centrale par des surfaces de rouleau cylindrique opposées adjacentes audit axe de soudage lorsque ledit bord libre (34) est appliqué en butée sur ledit épaulement circonférentiel (70).

3. Procédé selon la revendication 1 dans lequel lesdits rouleaux de guidage de soudure (68, 68a) sont montés de manière réglable afin de guider ledit bord libre (34) vers ledit axe de soudage suivant un angle prédéterminé par rapport à ladite surface de bande.

4. Procédé selon la revendication 1 dans lequel ledit bord libre (34) de ladite bande métallique (16) est guidé suivant ladite trajectoire prédéterminée par un rouleau presseur profilé (84a, 84b) s'étendant sur ladite surface profilée de ladite bande métallique (16) entre des faces de contact sensiblement parallèles espacées dudit rouleau presseur profilé (84a, 84b).

5. Procédé selon la revendication 1 dans lequel de l'énergie de soudage est communiquée audit bord libre (34) et audit axe de soudage prédéterminé par une bobine
d'induction (102) couplée à une source de courant électrique, ladite bobine (102) s'étendant sensiblement autour de ladite bande métallique (16) dans un plan sensiblement perpendiculaire à un axe longitudinal de celle-ci.

6. Procédé selon la revendication 1 dans lequel de l'énergie de soudage est communiquée audit bord libre (34) et audit axe de soudage prédéterminé par un ou plusieurs contacteurs couplés à une source de courant électrique.

7. Procédé selon la revendication 5 dans lequel un limiteur d'induction allongé en forme de tige supporté à une extrémité s'étend dans une cavité intérieure creuse de ladite surface profilée vers une zone adjacente audit axe de soudage dans laquelle ledit bord libre (34) est fusionné à ladite surface de ladite bande métallique (16).

8. Dispositif de soudage par résistance électrique ou induction (ERW) en ligne d'éléments en acier à bordure creuse dans un laminoir de formage à froid, ledit dispositif comprenant :
un poste de roulage de soudure (60) supportant avec liberté de rotation un ou plusieurs rouleaux de guidage de soudure afin de guider un bord libre (34) d'une bande métallique profilée (16) aligné linéairement avec un axe de soudage prédéterminé espacé par rapport audit bord libre (34) sur une surface de ladite bande métallique (16) **caractérisé en ce que** chacun desdits rouleaux de guidage (68, 68a) comporte, à sa surface, un épaulement circonférentiel (70) de manière à former, en utilisation, une butée pour ledit bord libre (34) ;
un rouleau de guidage profilé (66, 66a) adapté, en utilisation, afin d'appliquer ledit bord libre (34) de ladite bande métallique (16) en butée sur ledit épaulement circonférentiel (70) ; et,
un poste de boîte de soudage (61) supportant avec liberté de rotation au moins une paire de rouleaux presseurs (84a, 84b), en utilisation, afin d'appliquer ledit bord libre (34), une fois chauffé à une température prédéterminée, en contact de fusion avec ledit axe de soudage sur ladite surface, ladite paire de rouleaux presseurs (84a, 84b) coopérant, en utilisation, afin de guider ledit bord libre (34) sur une trajectoire linéaire prédéterminée sensiblement suivant un axe d'incidence d'une jonction soudée ultérieurement entre ledit bord libre (34) et ladite surface de ladite bande métallique (16) de telle sorte que l'énergie de soudage est concentrée par un effet de proximité le long dudit axe de soudage prédéterminé sur ladite surface et dans lequel un ou plusieurs rouleaux (68, 68a) servent à guider ledit bord libre (34) en alignement longitudinal avec une ligne de soudure désirée.

9. Dispositif selon la revendication 8 dans lequel ladite énergie de soudage est induite sur ledit bord libre (34) et ledit axe de soudage par des contacteurs électriques couplés de manière à pouvoir coulisser à ladite bande métallique (16) adjacente audit bord libre (34) et audit axe de soudage.

10. Dispositif selon la revendication 8 dans lequel ladite énergie de soudage est induite sur ledit bord libre et ledit axe de soudage par une bobine d'induction entourant transversalement ladite bande métallique dans un plan perpendiculaire à une direction de déplacement de ladite bande métallique à travers cette dernière.

11. Dispositif selon la revendication 8 dans lequel au moins un de ladite paire de rouleaux presseurs (84a, 84b) peut être réglé angulairement dans un plan perpendiculaire à une direction de déplacement de ladite bande métallique (16) entre ces derniers.

12. Dispositif selon la revendication 8 dans lequel au moins un de ladite paire de rouleaux presseurs (84a, 84b) peut être réglé par rapport à l'autre de ladite paire dans une direction perpendiculaire à un axe de rotation de ladite au moins une paire de rouleaux presseurs (84a, 84b).

13. Dispositif selon la revendication 8 dans lequel ladite boîte de soudage (61) comporte des rouleaux de support de bande (72) pouvant tourner autour d'axes parallèles respectifs perpendiculaires à une direction de déplacement d'un élément de bande métallique entre eux.

14. Dispositif selon la revendication 13 dans lequel au moins l'un desdits rouleaux de support de bande (81) comporte un bord externe profilé destiné à servir en tant que l'un de ladite paire de rouleaux presseurs (84a, 84b).

15. Dispositif selon la revendication 8 comportant plus d'un poste de roulage de soudure (60).

16. Dispositif selon la revendication 10 dans lequel un élément formant impédance en forme de tige supporté à l'une de ses extrémité, en amont desdits un ou plusieurs postes de roulage de soudure (60), s'étend dans une partie intérieure creuse d'une zone de bord profilée de ladite bande métallique (16).
